# EUROPÄISCHE PATENTSCHRIFT

(11) **EP 3 830 917 B1**
(45) Veröffentlichungstag und Bekanntmachung des Hinweises auf die Patenterteilung: **03.04.2024**
(21) Anmeldenummer: 19746027.2
(22) Anmeldetag: 16.07.2019
(51) Int. Cl.: H02B 1/28

(54) **EXPLOSIONSSICHERES GEHÄUSE MIT GETEILTEM DECKEL**
EXPLOSION-PROOF HOUSING WITH SPLIT COVER
BOÎTIER RÉSISTANT AUX EXPLOSIONS COMPRENANT UN COUVERCLE DIVISÉ

(30) Priorität: 27.07.2018 DE 102018118195
(43) Veröffentlichungstag der Anmeldung: 09.06.2021
(73) Patentinhaber: R. STAHL Schaltgeräte GmbH, 74638 Waldenburg (DE)
(72) Erfinder: KONDRUS, Elena, 74653 Künzelsau (DE); SCHMITT, Jürgen, 74613 Öhringen (DE); SEKINGER, Natascha, 74629 Baierbach (DE); WALCH, Otto, 74582 Gerabronn (DE); KOCHENDÖRFER, Christian, 74523 Schwäbisch Hall (DE); LIMBACHER, Bernd, 74523 Schwäbisch Hall (DE)
(74) Vertreter: Rüger Abel Patentanwälte PartGmbB
(86) Internationale Anmeldenummer: PCT/EP2019/069148
(87) Internationale Veröffentlichungsnummer: WO 2020/020708

(56) Entgegenhaltungen:
- CN-U- 202 712 771
- CN-U- 204 272 529
- CN-U- 204 727 363
- DE-U1- 8 508 807
- DE-U1- 29 520 910
- DE-U1- 29 921 637
- DE-U1- 29 921 637
- Atex Delvalle: "ATEX Enclosure Ex TRIBEX Series", , 12 February 2016 (2016-02-12), XP055673017, Retrieved from the Internet: URL:https://www.atexdelvalle.com/catalogos /Tribex_IP66_Delvalle_EN_v1.0-16.pdf [retrieved on 2020-03-03]

## Beschreibung

Die Erfindung betrifft ein explosionssicheres Gehäuse, bei dem zwischen dem Gehäuseinnenraum und der Umgebung vorhandene Öffnungen und Fugen so eng und dabei so lang sind, dass Flammen oder glühende Partikel aus dem Gehäuse nicht in die Umgebung gelangen können. Diese Gehäuse genügen der Schutzart "ex-d", die auch als druckfeste Kapselung bezeichnet wird.

Gehäuse der Bauart "druckfeste Kapselung" sind aus der DE 295 20 910 U1, der DE 299 21 637 U1 oder auch aus der GB 778 040 bekannt. Das dort beschriebene Gehäuse weist einen Gehäusekörper mit einem daran fixierten Deckel auf. Der Deckel ist mittels entsprechender Spannmittel an dem Gehäuse gehalten, wobei zwischen dem Deckel und dem Gehäuse eine Dichtung angeordnet ist. Zum Abbau von Überdruck ist das Gehäuse außerdem mit einer Druckentlastungseinrichtung versehen, die durch einen an einer Gehäuseöffnung gehaltenen porösen Körper gebildet ist.

Die DE 36 17 570 C2 beschreibt ein Gehäuse, dessen Gehäusekörper mit einer Bodenplatte geschlossen ist. Diese wird mittels Schrauben an dem Gehäuse gehalten. Zwischen der Bodenplatte und dem Gehäusekörper ist eine ringsum laufende Fuge ausgebildet.

Die Ausbildung einer Fuge zwischen Gehäuseteilen eines druckfest gekapselten Gehäuses ist auch aus der DE 198 60 383 B4, der DE 85 08 807 U1 und der CN 204 272 529 U bekannt. Die Gehäuseteile liegen dort an einer ebenen Fuge aneinander an und sind mit Schrauben gegeneinander gespannt.

Die CN 204 727 363 U offenbart ein Gehäuse mit zwei runden Gehäuseöffnungen, die jeweils durch einen runden Deckel verschlossen sind. Jeder Deckel schließt an einem kreisrunden Flachspalt an den Gehäusekörper an.

Weiter offenbaren die CN 202 712 771 U und der Prospekt Atex Delvalle:" ATEX Enclosure Ex TRIBEX Series", 12. Februar 2016 (2016-02-12), XP055673017, URL: https://www.atexdelvalle.com/catalogos/Tribex IP66 Delvalle EN v1.0-16.pdf Gehäuse mit einer frontseitigen Gehäuseöffnung, die durch einen Steg in zwei Teilöffnungen unterteilt ist. Türen oder Deckel des Gehäuses sind dazu vorgesehen, die beiden Teilöffnungen zu schließen. Jede Tür oder jeder Deckel schließt dabei mit dem Gehäuse über eine rechteckförmige Dichtung für sich ab.

Der Anschluss von Gehäuseteilen druckfester Gehäuse aneinander über einen Flachspalt hat sich grundsätzlich bewährt. Auf diese Weise kann ein druckfestes Gehäuse mittels eines Deckels geschlossen werden, der umlaufend ununterbrochen über einen Flachspalt an das Gehäuse angeschlossen ist. Jedoch treten bei größeren Gehäusen aufgrund des Gewichts und der Größe des Deckels Handhabungsprobleme auf. Dies gilt insbesondere, wenn nicht nur die Gehäuse, sondern auch die Deckel sehr groß sind, beispielsweise, um im Bedarfsfall ungehinderten Zugriff auf in das Gehäuse eingebaute Elemente zu haben. Auch sind große Deckel bei beengten Einbausituationen, z.B. in Schiffen oder auf Bohrinseln sehr störend, weil immer ausreichende Fluchtwege zur Verfügung stehen müssen.

Es ist Aufgabe der Erfindung, ein Konzept für ein explosionssicheres Gehäuse anzugeben, das wenigstens eines der genannten Probleme vermeidet oder mindert.

Diese Aufgabe wird mit dem Gehäuse nach Anspruch 1 gelöst:
Das Gehäuse ist mit einer Deckelanordnung versehen, die zwei oder mehrere Deckel umfasst. Die Deckel bilden mit dem Gehäuse jeweils einen zünddurchschlagsicheren Spalt, der jedoch nicht den gesamten Deckelumfang einnimmt, sondern sich vielmehr entlang des Umfangs der Deckelanordnung erstreckt. Zwischen den beiden Deckeln der Deckelanordnung ist ein weiterer zünddurchschlagsicherer Spalt angeordnet, der jedoch, anders als der um die Deckelanordnung herumführende Spalt, nicht ringförmig geschlossen und somit endlos, sondern linear gestreckt ausgebildet ist und somit zwei Enden aufweist. Die Enden des zwischen Deckeln ausgebildeten zünddurchschlagsicheren Spalts berühren den umlaufenden ringförmigen zünddurchschlagsicheren Spalt oder enden in geringem Abstand zu diesem.

Der von den wenigstens zwei Deckeln mit dem Gehäusekörper begrenzte zünddurchschlagsichere Spalt ist vorzugsweise als Flachspalt ausgebildet, der, weiter vorzugsweise, in einer Ebene angeordnet ist.

Ebenso ist der zwischen den beiden Deckeln ausgebildete zünddurchschlagsichere Spalt vorzugsweise ein Flachspalt. Dieser kann in der gleichen Ebene wie der erstgenannte, ringsum führende zünddurchschlagsichere Spalt oder in einer gegen diese Ebene versetzten Ebene angeordnet sein. Dies eröffnet eine Vielzahl von Möglichkeiten zur Gestaltung des Übergangs zwischen dem ringsum führenden zünddurchschlagsicheren Spalt und dem zwischen den beiden Deckeln ausgebildeten zünddurchschlagsicheren Spalt.

Zwischen den beiden Deckeln kann außerdem eine Stoßfuge ausgebildet sein, die, abgesehen von ihren Enden, nicht zünddurchschlagsicher ausgebildet sein muss. An ihrer der Umgebung zugewandten Flanke, d.h. in ihrer Querrichtung, kann sie durch den zwischen den Deckeln ausgebildeten zünddurchschlagsicheren Spalt gegen Flammendurchschlag abgesichert sein, an ihren beiden Enden kann die Stoßfuge mit einem Stoßfugenverschluss versehen sein, der einen Zünddurchschlag verhindert. Dadurch sind für die Stoßfuge Toleranzen zulässig, die die Positionierung der beiden Deckel beim Schließen des Gehäuses erleichtern. Zum Beispiel können zum temporären Halten der beiden Deckel in Offenstellung spielbehaftete Scharniere vorgesehen sein. Außerdem können die Deckel mittels Schrauben, Schnellspannverschlüssen oder anderen Schließmechanismen mit dem Gehäusekörper verbunden sein, die die beiden Deckel zueinander positionieren und dabei eine relativ große Toleranz (zum Beispiel etwa 1 mm oder mehr) zulassen. Dies stellt eine Konstruktionserleichterung und zugleich eine Montageerleichterung beim Öffnen und Schließen des Gehäuses dar.

Ausführungsformen der Erfindung, mit denen sich ein oder mehrere der genannten Vorteile erreichen lassen, sind Gegenstand der Beschreibung, der Zeichnung oder von Unteransprüchen. Es zeigen:
Figur 1 das erfindungsgemäße Gehäuse, in perspektivischer Prinzipdarstellung mit Hauptansicht der Vorderseite,
Figur 2 das Gehäuse nach Figur 1, in Draufsicht,
Figur 3 das Gehäuse nach Figur 1, in Vorderansicht, mit besonderer Darstellung der zünddurchschlagsicheren Spalte,
Figur 4 ein Ausschnitt des Deckels nach Figur 2 im Bereich des Anschlusses seiner beiden Deckel aneinander,
Figur 5 eine abgewandelte Bauform des Deckels, in Darstellung entsprechend Figur 4,
Figur 6 eine weiter abgewandelte Bauform des Gehäuses und seines Deckels, in ausschnittsweiser Darstellung, in einer Darstellung entsprechend Figur 4,
Figur 7 eine weiter abgewandelte Ausführungsform eines erfindungsgemäßen Gehäuses mit besonderer Darstellung seines Stoßfugenverschlusses, in Draufsicht mit durchsichtig dargestellten Deckeln,
Figur 8 bis 10 weitere Ausführungsformen des erfindungsgemäßen Gehäuses jeweils, in perspektivischer Darstellung, mit besonderem Augenmerk auf dem Stoßfugenverschluss.

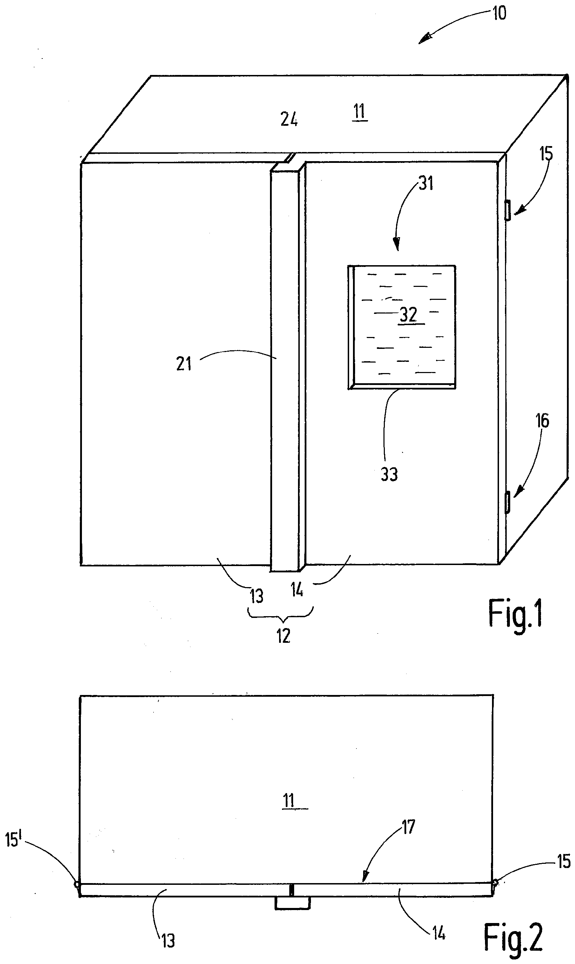

In Figur 1 ist ein Gehäuse 10 veranschaulicht, das nach der Schutzart druckfeste Kapselung als explosionssicheres Gehäuse ausgebildet ist. Das Gehäuse 10 weist einen Gehäusekörper 11 auf, der einen Innenraum zur Aufnahme von Komponenten umschließt, die Zündquellen bilden können. Der Gehäusekörper 11 kann nach Art eines Kastens mit zueinander im rechten Winkel stehenden Wänden oder auch anderweitig ausgebildet sein. Der Gehäusekörper 11 weist eine Zugangsöffnung auf, die durch eine Deckelanordnung 12 verschlossen ist. Zu der Deckelanordnung 12 gehören mindestens ein erster Deckel 13 und ein zweiter Deckel 14, die gemeinsam die Zugangsöffnung des Gehäusekörpers 11 verschließen. Die beiden Deckel 13, 14 sind an dem Gehäusekörper 11 durch geeignete, nicht weiter veranschaulichte Spannmittel gehalten und gegeneinander gespannt. Dazu können Schrauben, Spannklammern oder sonstige Spannmittel dienen, die die beiden Deckel 13, 14 auf den Gehäusekörper 11 hin und gegeneinander spannen. Außerdem können die Deckel 13, 14, wie in Figur 1 am Beispiel des Deckels 14 veranschaulicht ist, durch Scharniere 15, 16 (sowie 15`, siehe Figur 2 am Deckel 13) oder ähnliche Abstützmittel an dem Gehäusekörper 11 gehalten sein, die, wenn die Deckelanordnung 12 geöffnet ist, das Gewicht des jeweiligen Deckels 13, 14 tragen.

Die Scharniere 15, 16 (sowie 15', 16') legen vorzugsweise eine gemeinsame parallel zu einer der Seiten des Gehäusekörpers 11 verlaufende Scharnierachse mit einigem Spiel fest, so dass eine Ausrichtung des Deckels 14 an dem Gehäusekörper 11, beispielsweise mittels Passstiften oder dergleichen, möglich ist, wenn der Deckel 14 geschlossen wird.

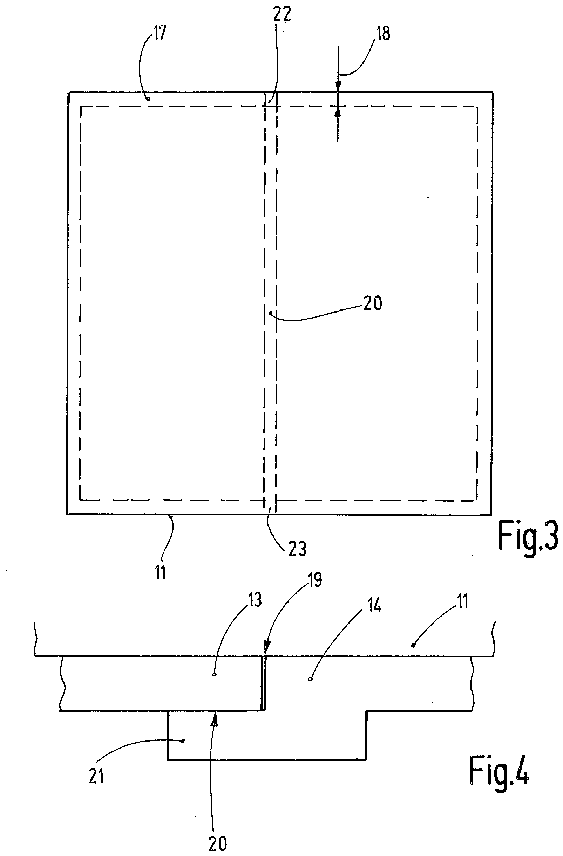

Die beiden Deckel 13, 14 liegen, wie Figur 2 erkennen lässt, an einem zünddurchschlagsicheren Spalt 17 an dem Gehäusekörper 11 an. Dieser zünddurchschlagsichere Spalt 17 ist in Figur 3 nochmals veranschaulicht. Er wird dort außen durch die Kontur des Gehäusekörpers 11 und innen durch eine gestrichelte Linie begrenzt, die die Berandung der Zugangsöffnung des Gehäuses des Gehäusekörpers 11 markiert. Typischerweise weist der zünddurchschlagsichere Spalt 17 eine Breite 18 auf, die ausreicht, um durchtretendes Gas zu kühlen und den Durchschlag von Flammen zu verhindern. Der zwischen der Deckelanordnung 12 und dem Gehäusekörper 11 ausgebildete Spalt 17 führt entlang des gesamten Umfangs der Deckelanordnung 12 bzw. des Gehäusekörpers 11, so dass er die Zugangsöffnung vollständig umschließt. Der Spalt 17 folgt dabei der Form der Zugangsöffnung und kann entsprechend ringförmig eckig, ringförmig rund oder anderweitig geformt, dabei aber in sich geschlossen und somit endlos ausgebildet sein. An der Stoßfuge zwischen den beiden Deckeln 13, 14 weist der Gehäusekörper 11, wenigstens vorzugsweise, keine Anlagefläche auf. Mit anderen Worten: Der Spalt 17 ist dann unverzweigt. Es ist seitens des Gehäusekörpers 11 dort keine Anlagefläche für die Deckel 13, 14 vorhanden. Jeder Deckel 13, 14 liegt somit lediglich dreiseitig auf dem Gehäusekörper 11 auf.

Vorzugsweise ist der Spalt 17, wie schon Figur 2 nahelegt, als ebener Spalt ausgebildet. Er wird zwischen einer Anlagefläche, die an dem Gehäusekörper 11 ausgebildet ist und entsprechend zugeordneten rückseitigen Anlageflächen der Deckel 13, 14 ausgebildet. Die an dem Gehäuse 10 wirksamen Klemm- und Haltemittel der Deckel 13, 14 halten die Deckel 13, 14 dabei in fester Anlage mit dem Gehäusekörper 11. Weitere Klemmmittle halten die Deckel 13, 14 in fester Anlage miteinander. Die Spannrichtung der Klemm- und Haltemittel, die die Deckel 13, 14 gegen den Gehäusekörper spannen, stimmt vorzugsweise mit der Spannrichtung überein, in der die Deckel 13, 14 gegeneinander gespannt sind. Damit wird erreicht, dass jedenfalls, auch im Falle einer impulsartigen Drucksteigerung in dem Gehäuse 10, die Spaltenweite zwischen den Deckeln 13, 14 und dem Gehäuse sowie die Spaltweite zwischen den Deckeln 13, 14 meist wenige 100stel Millimeter, jedenfalls aber ein Maß nicht übersteigt, das einen Zünddurchschlag verhindert.

Die beiden Deckel 13, 14 können die Zugangsöffnung des Gehäusekörpers 11 vorzugsweise etwa je zur Hälfte verschließen. Dabei liegen sie in geschlossenem Zustand einander an einer Stoßfuge 19 gegenüber, die aus Figur 4 ersichtlich ist. Diese Stoßfuge unterliegt hinsichtlich ihrer Weite einer gewissen Toleranz, die sich aus Fertigungstoleranzen, Temperaturwechseln und Toleranzen hinsichtlich der Positionierung der beiden Deckel 13, 14 auf dem Gehäusekörper 11 ergibt. Die Stoßfuge 19 ist dabei vorzugsweise so dimensioniert, dass die Deckel 13, 14 stirnseitig aneinander stoßen, um nicht unerwünscht zu klemmen oder ein Schließen der Deckel 13, 14 zu verhindern.

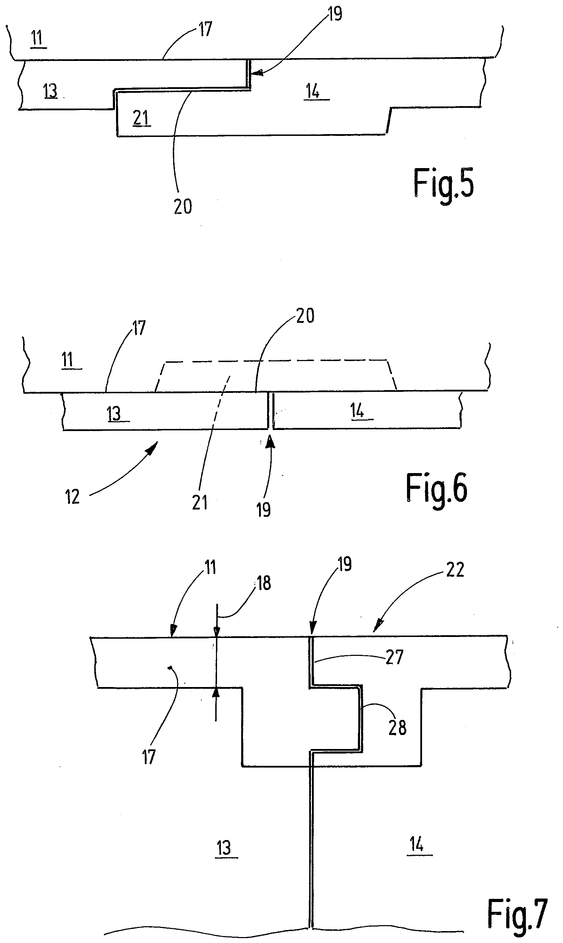

Zwischen den beiden Deckeln 13, 14 ist jedoch ein zünddurchschlagsicherer Spalt 20 ausgebildet, indem einer der Deckel, hier beispielsweise Deckel 14, einen sich über den anderen Deckel 13 erstreckenden leistenartigen Vorsprung 21 aufweist. Der Vorsprung 21 weist an der dem Deckel 13 zugewandten Seite eine ebene Fläche auf, die an der Außenseite des Deckels 13 anliegt und mit diesem den streifenförmigen Spalt 20 bildet. Dieser ist in Figur 3 nochmals veranschaulicht. Er erstreckt sich, wie ersichtlich, diametral über die von dem Spalt 17 umgrenzte Zugangsöffnung und überlappt den Spalt 17 an zwei einander gegenüber liegenden Stellen, die zugleich die Enden 22, 23 des Spalts 20 darstellen. Der Vorsprung 21 kann durch eine auf den Deckel 14 aufgelegte, an diesen angeschraubte, angeschweißte, in ihn eingeklebte oder aus ihm ausgefräste Leiste oder in sonstiger Weise ausgebildet sein. An der dem Deckel 13 zugewandten Seite weist der Vorsprung 21 eine formtreue, z.B. ebene, z.B. bearbeitete Fläche auf. Ebenso weist der Deckel 13 an der dem Vorsprung 21 zugewandten Seite eine formtreue, z.B. ebene, z.B. bearbeitete Fläche auf, so dass die beiden Flächen dicht aufeinander liegend montierbar sind. In Figur 1 nicht veranschaulichte Spannmittel spannen den Vorsprung 21 gegen den Deckel 13, so dass die bearbeiteten Flächen fest aneinander liegen. Alternativ können beide Deckel 13, 14 aus massivem Material ausgebildet und an der Überlappungsstelle mit einer entsprechenden eingefrästen randoffenen Nut versehen sein, so dass sie beispielsweise gemäß Figur 5 ineinander greifen. Auch dadurch kann die einen Zünddurchschlag verhindernde Länge und Enge des Spalts 20 zwischen den Deckeln 13, 14 sichergestellt werden.

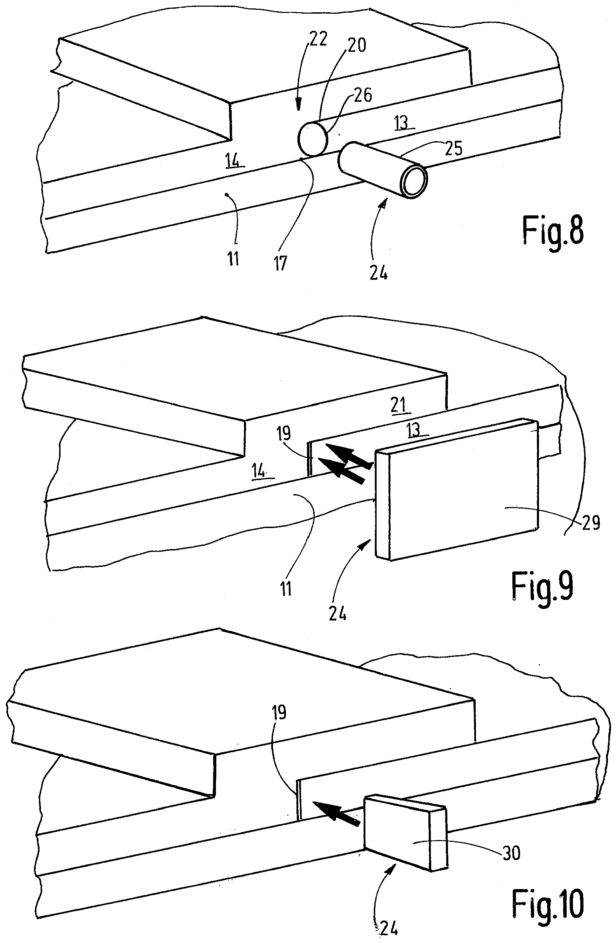

Die Stoßfuge 19 kann im Bereich der Enden 22, 23 Öffnungen bilden, die von sich aus noch nicht zünddurchschlagsicher sind. Deswegen ist an beiden Enden 22, 23 jeweils ein Stoßfugenverschluss vorgesehen, wie er beispielsweise in Figur 8 am Beispiel des Endes 23 veranschaulicht ist. Der Stoßfugenverschluss kann durch eine Dichtung, wie die in Figur 8 veranschaulichte elastische Dichtung 25 gebildet sein, die sich in eine entsprechende Öffnung 26 einfügt, die zum Beispiel als Zylinderöffnung am Ende der Stoßfuge 19 ausgebildet und von den halbzylindrisch gerundeten Stirnseiten der beiden Deckel 13, 14 begrenzt ist. Die elastische Dichtung 25 kann ein elastischer Zylinder (Gummizylinder oder dergleichen) oder auch ein Hohlzylinder sein, der durch Formänderung in unterschiedliche Formgestalt überführbar ist. Beispielsweise kann dazu ein zentrisch in der elastischen Dichtung 25 angeordneter Exzenter, eine Druckschraube oder ein anderes Spannmittel vorgesehen sein. Anstelle von Gummi kann ein anderer verformbarer Werkstoff, beispielsweise ein Metall, ein metallisierter Kunststoff oder dergleichen, Anwendung finden. Anstelle der Paarung einer zylindrischen Öffnung 26 mit einer zylindrischen Dichtung können andere Querschnittsformen, wie beispielsweise eine Viereckform eine Mehreckform oder dergleichen, sowohl für die Öffnung 26 als auch auf die Dichtung 25 Anwendung finden. Die Dichtung 25 legt sich an beide Stirnseiten der Deckel 13, 14 gleichermaßen an und schließt außerdem dicht an sowohl den Spalt 17 als auch den Spalt 20 an, wie insbesondere aus Figur 8 hervorgeht. Die Formveränderung der elastischen Dichtung 25 kann durch eine Achse oder eine andere Maßnahme, zum Beispiel eine Schraube, einen Keil, ein Konus, Kompression zwischen den Deckeln 13, 14 oder andere Möglichkeiten zur Druckausübung auf die Dichtung 25 erreicht werden.

An der insoweit beschriebenen Ausführungsform des Gehäuses 10 sind zahlreiche Abwandlungen möglich, die sowohl die Anordnung des Spalts 20 und der Stoßfuge 19 wie auch die Ausbildung des Stoßfugenverschlusses 24 betreffen. Beispielsweise kann der Stoßfugenquerschnitt vermindert werden, indem der Abstand zwischen dem zünddurchschlagsicheren Spalt 17 und dem zünddurchschlagsicheren Spalt 20 vermindert wird, wie es in Figur 5 beispielhaft veranschaulicht ist. Der Deckel 13 weist dort eine passende Ausnehmung für den Vorsprung 21 des Deckels 14 auf, so dass die Breite der Stoßfuge 19 vermindert wird. An ihren Enden kann die wiederum mit einem Stoßfugenverschluss 24 versehen sein.

Es ist gemäß Figur 6 auch möglich, den Vorsprung 21 des Deckels 14 innerhalb des Innenraums des Gehäusekörpers 11 anzuordnen, so dass der Vorsprung 21 den Deckel 13 nicht übergreift, wie in den Figuren 4 und 5 dargestellt ist, sondern diesen untergreift. Dadurch liegen der zünddurchschlagsichere Spalt 17 und der zünddurchschlagsichere Spalt 20 in einer gemeinsamen Ebene. Die Stoßfuge 19 liegt nun an der zur Umgebung hin offenen Seite der Deckelanordnung 12. An den kritischen Übergängen zwischen dem Spalt 20 und dem Spalt 17 kann wiederum ein Stoßfugenverschluss 24 angeordnet sein, der die Stelle überbrückt, an der der Spalt 20 an den Spalt 17 anschließt.

Es ist auch möglich, die Stoßfuge selbst zünddurchschlagsicher auszubilden. Figur 7 veranschaulicht dazu eine bei den Ausführungsformen nach Figur 1 bis 5 anwendbare Stoßfugenkonfiguration in Draufsicht von oben. Dazu sind die beiden Deckel 13, 14 in Figur 7 durchsichtig veranschaulicht. Der Gehäusekörper 11 weist im Bereich des Endes 22 der Stoßfuge 19 einen nach innen gerichteten, sich parallel zu den Rückseiten der Deckel 13, 14 erstreckenden Vorsprung auf, der die Breite 18 übersteigt und somit breiter als beispielsweise 25 mm ist. Im gewählten Ausführungsbeispiel hat er beispielsweise eine Breite von 60 mm. Oberhalb dieses Vorsprungs, an dem die beiden Deckel 13, 14 dicht anliegen, ist die Stoßfuge 19 labyrinthartig geformt, beispielsweise in Gestalt einer Mäanderform, einer Wellenform, einer ineinander greifenden Verzahnung oder dergleichen. Insbesondere sind mehrere Stoßfugenabschnitte 27, 28 ausgebildet, die jeweils eine Länge aufweisen, die zur Zünddurchschlagsicherheit führt, beispielsweise eine Länge von 25 mm oder mehr. Bei der Ausführungsform nach Figur 7 sind im Verlauf der Stoßfuge 19 mindestens zwei, vorzugsweise aber mehrere Ecken vorhanden, um die zünddurchschlagsichere Geometrie der Stoßfuge zu gewährleisten. Die im Verlauf der Stoßfuge vorhandenen Winkel können 90° oder einen anderen Wert haben.

Bei allen Ausführungsformen mit innenliegender Stoßfuge 19, bei denen die Stoßfuge 19 zwischen den Spalten 17 und 20 liegt, kann die endseitige Abdichtung der Stoßfuge 19 nach jeder der in den Figuren 8 bis 10 veranschaulichten Prinzipien erfolgen. Zum Beispiel kann die Stoßfuge 19, wie es Figur 9 nahelegt, mit einem Deckel 29 verschlossen werden, der sowohl den Vorsprung 21 wie auch den darunterliegenden Teil des Deckels 13 und den an die Stoßfuge 19 anschließenden Teil des Deckels 14 und einen Abschnitt des Gehäusekörpers 11 überdeckt. Der Deckel 29 kann durch geeignete Befestigungsmittel Schrauben, Klemmen oder dergleichen an dem Gehäusekörper 11 und/oder den Deckeln 13, 14 befestigt werden.

Alternativ kann als Stoßfugenverschluss 24 ein keilartiges Dichtungselement 30 aus flexiblem oder nicht flexiblem, hohlem oder voll ausgebildetem Material in das Ende der Stoßfuge 19 eingesetzt werden. Das keilförmige Dichtungselement 30 kann (wie auch das Dichtungselement 25) auch aus einem porösen Material bestehen. Die Porosität des Materials wird dabei so gewählt, dass das Material sperrend gegen Flammendurchtritt wirkt.

Allen Ausführungsformen des Gehäuses 10 ist gemeinsam, dass dieses zumindest vorzugsweise mit einer Druckentlastungseinrichtung 31 versehen ist, wie sie in Figur 1 beispielhaft veranschaulicht ist. Zu der Druckentlastungseinrichtung 31 gehört mindestens ein poröser Körper 32, der entweder in dem geschlossenen Innenraum des Gehäuses 11 oder an einer Druckentlastungsöffnung 33 angeordnet ist. Die Druckentlastungsöffnung 33 verbindet den Innenraum des Gehäuses 10 mit der Umgebung und kann in mindestens einer der Deckel 13, 14 und/oder in dem Gehäusekörper 11 angeordnet sein. Die Druckentlastungsöffnung 33 und der darin angeordnete Druckentlastungskörper 32 verhindern den Aufbau einer schädlichen Überdruckspitze in dem Gehäuse 10, wenn dort vorhandenes explosives Gasgemisch zum Beispiel während des Betriebs elektrischer Komponenten gezündet wird. Durch die wirksame Minderung von Druckspitzen durch poröse Körper 32 mit ausreichendem Volumen werden in diese Körper 32 eintretende heiße Gasströme soweit abgekühlt, dass deren Volumenreduktion einen Druckaufbau in dem Gehäuse 10 verhindert. Zusätzlich kann bei Anordnung des porösen Körpers 32 in einer Druckentlastungsöffnung 33 durch Gasübertritt ins Freie ein zusätzlicher Druckentlastungseffekt bewirkt werden.

Die wirksame Druckentlastung des Gehäuses 10 sowie die feste Verspannung der Deckelanordnung 12 gegen den Gehäusekörper 11 wie auch die feste Verspannung der beiden Deckel 13, 14 gegeneinander im Bereich des Vorsprungs 21 durch entlang desselben angeordnete Spannmittel sowie durch an dem Umfang der Deckelanordnung 12 angeordnete Spannmittel gestattet die zwei- oder mehrflüglige Ausbildung der Deckelanordnung 12. Damit werden Größe und Gewicht der Deckel 13, 14 auf ein handhabbares Maß reduziert, während das Gehäuse besonders groß ausgebildet werden kann. Zusätzlich wirkt die durch die Druckentlastungseinrichtung 31 bewirkte Verminderung einer Druckspitze, dass die Spaltgeometrie auch bei einer Explosion innerhalb des Gehäuses 10 erhalten bleibt und ein Zünddurchschlag unterbleibt. Die zünddurchschlagsichere Spaltgeometrie kann in geschlossenem Zustand durch ein oder mehrere Scharniere, Positionierhilfen, Zentrierstifte, Formgebung der Spaltgeometrie, Formgebung der Stoßfuge, Einschraubhilfen, Passformen oder mechanisches Fügen erzwungen werden.

Das erfindungsgemäße explosionsgeschützte Gehäuse 10 weist eine Deckelanordnung 12 auf, die aus zwei oder mehreren Deckeln 13, 14 besteht. Die Deckel 13, 14 schließen an einem zünddurchschlagsicheren Spalt 17 an den Gehäusekörper 11 an. Zwischen den einzelnen Deckeln 13, 14 ist ebenfalls mindestens ein zünddurchschlagsicherer Spalt 20 angeordnet. An verbleibenden Stoßfugen oder sonstigen Spalten und Durchgängen sind gesonderte Dichtungen insbesondere in Gestalt eines Stoßfugenverschlusses 24 angeordnet.

### Bezugszeichen:

- 10: Gehäuse
- 11: Gehäusekörper
- 12: Deckelanordnung
- 13: erster Deckel
- 14: zweiter Deckel
- 15,15',16: Scharniere
- 17: Spalt
- 18: Breite des Spalts 17
- 19: Stoßfuge
- 20: Spalt
- 21: Vorsprung
- 22, 23: Enden des Spalts 20
- 24: Stoßfugenverschluss
- 25: elastische Dichtung
- 26: Öffnung
- 27, 28: Stoßfugenabschnitte
- 29: Deckel
- 30: Dichtungselement
- 31: Druckentlastungseinrichtung
- 32: poröser Körper
- 33: Druckentlastungsöffnung

## Patentansprüche

1. Explosionsgeschütztes Gehäuse (10), insbesondere Gehäuse der Schutzart "Druckfeste Kapselung",
mit einem Gehäusekörper (11) der einen Innenraum umschließt und eine Zugangsöffnung aufweist,
mit einer Deckelanordnung (12), die wenigstens einen ersten und einen zweiten Deckel (13, 14) umfasst,
wobei der erste und der zweite Deckel (13, 14) gemeinsam die Zugangsöffnung des Gehäusekörpers (11) verschließen,
wobei zwischen den Deckeln (13, 14) und dem Gehäusekörper (11) sowie zwischen den Deckeln (13, 14) jeweils ein zünddurchschlagsicherer Spalt (17, 20) ausgebildet ist und die Deckel (13, 14) zur Ausbildung des explosionssicheren Spaltes (20) einander übergreifend angeordnet sind,
wobei der zwischen den Deckeln (13, 14) und dem Gehäusekörper (11) ausgebildete Spalt (17) entlang des gesamten Umfangs der Deckelanordnung (12) bzw. des Gehäusekörpers (11) führt, so dass er die Zugangsöffnung vollständig umschließt und ringförmig eckig oder ringförmig rund geformt ist,
**dadurch gekennzeichnet, dass**
der zwischen den beiden Deckeln (13, 14) der Deckelanordnung (12) ausgebildete Spalt (20) zwei Enden aufweist, wobei die Enden des zwischen den Deckeln (13, 14) ausgebildeten zünddurchschlagsicheren Spalts (20) den umlaufenden zünddurchschlagsicheren Spalt (17) berühren.

2. Gehäuse nach Anspruch 1, **dadurch gekennzeichnet, dass** die von den wenigstens zwei Deckeln (13, 14) mit dem Gehäusekörper (11) jeweils begrenzten Spalte (17, 20) Flachspalte sind.

3. Gehäuse nach einem der vorstehenden Ansprüche, **dadurch gekennzeichnet, dass** der von den wenigstens zwei Deckeln (13, 14) mit dem Gehäusekörper (11) jeweils begrenzten Spalt (17) in einer Ebene liegend angeordnet ist.

4. Gehäuse nach einem der vorstehenden Ansprüche, **dadurch gekennzeichnet, dass** der zwischen den wenigstens zwei Deckeln (13, 14) ausgebildete Spalt (20) ein Flachspalt ist.

5. Gehäuse nach einem der vorstehenden Ansprüche, **dadurch gekennzeichnet, dass** der zwischen den wenigstens zwei Deckeln (13, 14) ausgebildete Spalt (20) parallel zu dem zwischen den wenigstens zwei Deckeln (13, 14) und dem Gehäusekörper (11) ausgebildeten Spalt (17) orientiert ist.

6. Gehäuse nach einem der vorstehenden Ansprüche, **dadurch gekennzeichnet, dass** zwischen den wenigstens zwei Deckeln (13, 14) eine Stoßfuge (19) ausgebildet ist.

7. Gehäuse nach Anspruch 6, **dadurch gekennzeichnet, dass** die Stoßfuge (19) den zwischen den Deckel (13, 14) ausgebildeten Spalt (20) und den zwischen den Deckeln (13, 14) und dem Gehäusekörper (11) ausgebildete Spalt (17) verbindend angeordnet ist.

8. Gehäuse nach Anspruch 6, **dadurch gekennzeichnet, dass** die Stoßfuge (19) mit einem Stoßfugenverschluss (24) versehen ist.

9. Gehäuse nach Anspruch 8, **dadurch gekennzeichnet, dass** der Stoßfugenverschluss (24) bezüglich der Stoßfuge (19) endseitig angeordnet ist.

10. Gehäuse nach einem der vorstehenden Ansprüche, **dadurch gekennzeichnet, dass** das Gehäuse (10) eine Druckentlastungseinrichtung (31) aufweist.

## Claims

1. Explosion-proof housing (10), in particular a housing of the "pressure-resistant encapsulation" protection class,
with a housing body (11) which encloses an interior and has an access opening,
with a cover arrangement (12) which comprises at least a first and a second cover (13, 14),
wherein the first and second covers (13, 14) together close the access opening of the housing body (11),
wherein a respective gap (17, 20) which is secure against ignition breakthrough, is provided between the covers (13, 14) and the housing body (11) and also between the covers (13, 14), and the covers (13, 14) are arranged overlapping one another in order to form the explosion-proof gap (20),
wherein the gap (17) formed between the covers (13, 14) and the housing body (11) leads along the entire periphery of the cover arrangement (12) or housing body (11) so that it completely surrounds the access opening and is formed as an angular or round ring,
**characterised in that**
the gap (20) formed between the two covers (13, 14) of the cover arrangement (12) has two ends, wherein the ends of the gap (20), which is secure against ignition breakthrough and formed between the covers (13, 14), touch the peripheral gap (17) which is secure against ignition breakthrough.

2. Housing according to claim 1, **characterised in that** the respective gaps (17, 20) delimited by the at least two covers (13, 14) with the housing body (11) are flat gaps.

3. Housing according to any of the preceding claims, **characterised in that** the gap (17) delimited by the at least two covers (13, 14) with the housing body (11) is arranged lying in a plane.

4. Housing according to any of the preceding claims, **characterised in that** the gap (20) formed between the at least two covers (13, 14) is a flat gap.

5. Housing according to any of the preceding claims, **characterised in that** the gap (20) formed between the at least two covers (13, 14) is oriented parallel to the gap (17) formed between the at least two covers (13, 14) and the housing body (11).

6. Housing according to any of the preceding claims, **characterised in that** a butt joint (19) is formed between the at least two covers (13, 14).

7. Housing according to claim 6, **characterised in that** the butt joint (19) is arranged connecting the gap (20) formed between the covers (13, 14) and the gap (17) formed between the covers (13, 14) and the housing body (11).

8. Housing according to claim 6, **characterised in that** the butt joint (19) is provided with a but joint closure (24).

9. Housing according to claim 8, **characterised in that** the butt joint closure (24) is arranged on the end relative to the but joint (19).

10. Housing according to any of the preceding claims, **characterised in that** the housing (10) has a pressure-relief device (31).

## Revendications

1. Boîtier antidéflagrant (10), en particulier boîtier du type de protection « enveloppe antidéflagrante »,
comprenant un corps de boîtier (11) qui renferme un espace interne et présente une ouverture d'accès,
comprenant un système de couvercles (12) qui comporte au moins un premier et un deuxième couvercle (13, 14),
dans lequel le premier et le deuxième couvercle (13, 14) ferment ensemble l'ouverture d'accès du corps de boîtier (11),
dans lequel il est prévu, entre les couvercles (13, 14) et le corps de boîtier (11) et entre les couvercles (13, 14), respectivement un joint antidéflagrant (17, 20), et les couvercles (13, 14) sont disposés de manière à se chevaucher l'un l'autre, en vue de former le joint antidéflagrant (20),
dans lequel le joint (17) formé entre les couvercles (13, 14) et le corps de boîtier (11) s'étend le long de la totalité de la périphérie du système de couvercles (12) ou du corps de boîtier (11), de sorte qu'il entoure complètement l'ouverture d'accès et présente une forme annulaire angulaire ou annulaire ronde,
**caractérisé en ce que**
le joint (20) formé entre les deux couvercles (13, 14) du système de couvercles (12) présente deux extrémités, sachant que les extrémités du joint antidéflagrant (20) formé entre les couvercles (13, 14) sont en contact avec le joint antidéflagrant (17) périphérique.

2. Boîtier selon la revendication 1, **caractérisé en ce que** les joints (17, 20) délimités respectivement par les couvercles (13, 14), au nombre d'au moins deux, sont des joints plats.

3. Boîtier selon l'une des revendications précédentes, **caractérisé en ce que** le joint (17) délimité respectivement par les couvercles (13, 14), au nombre d'au moins deux, avec le corps de boîtier (11), est disposé dans un même plan.

4. Boîtier selon l'une des revendications précédentes, **caractérisé en ce que** le joint (20) formé entre les couvercles (13, 14), au nombre d'au moins deux, est un joint plat.

5. Boîtier selon l'une des revendications précédentes, **caractérisé en ce que** le joint (20) formé entre les couvercles (13, 14), au nombre d'au moins deux, est orienté parallèlement au joint (17) formé entre les couvercles (13, 14), au nombre d'au moins deux, et le corps de boîtier (11).

6. Boîtier selon l'une des revendications précédentes, **caractérisé en ce qu'**un joint montant (19) est formé entre les couvercles (13, 14), au nombre d'au moins deux.

7. Boîtier selon la revendication 6, **caractérisé en ce que** le joint montant (19) est disposé de manière à relier le joint (20) formé entre les couvercles (13, 14) et le joint (17) formé entre les couvercles (13, 14) et le corps de boîtier (11).

8. Boîtier selon la revendication 6, **caractérisé en ce que** le joint montant (19) est doté d'une fermeture de joint montant (24).

9. Boîtier selon la revendication 8, **caractérisé en ce que** la fermeture de joint montant (24) est disposée côté extrémité par rapport au joint montant (19).

10. Boîtier selon l'une des revendications précédentes, **caractérisé en ce que** le boîtier (10) présente un dispositif de décompression (31).
